# EUROPÄISCHE PATENTSCHRIFT

(11) **EP 2 350 594 B1**
(45) Veröffentlichungstag und Bekanntmachung des Hinweises auf die Patenterteilung: **17.01.2018**
(21) Anmeldenummer: 09755909.0
(22) Anmeldetag: 19.11.2009
(51) Int. Cl.: G01L 3/10

(54) **SENSOREINRICHTUNG ZUR DREHMOMENTMESSUNG IN LENKSYSTEMEN**
SENSOR FOR MEASURING TORQUE IN A STEERING SYSTEM
CAPTEUR DE COUPLE DANS UN APPAREIL DE DIRECTION

(30) Priorität: 25.11.2008 DE 102008044059
(43) Veröffentlichungstag der Anmeldung: 03.08.2011
(73) Patentinhaber: Robert Bosch Automotive Steering GmbH, 73527 Schwäbisch Gmünd (DE)
(72) Erfinder: ABELE, Wolfgang, 73565 Spraitbach (DE)
(86) Internationale Anmeldenummer: PCT/EP2009/065452
(87) Internationale Veröffentlichungsnummer: WO 2010/060851

(56) Entgegenhaltungen:
- DE-A1- 10 108 883
- DE-A1- 10 336 853
- DE-A1-102005 038 516
- US-A- 5 501 110

## Beschreibung

Die Erfindung bezieht sich auf eine Sensoreinrichtung zur Drehmomentmessung in Lenksystemen von Fahrzeugen nach dem Oberbegriff des Anspruches 1.

In der DE 101 27 169 B4 wird ein Lenksystem für ein Kraftfahrzeug beschrieben, das mit einem elektrischen Servomotor zur Lenkkraftunterstützung ausgestattet ist. Zur Festlegung der Höhe des Unterstützungsmomentes ist die Kenntnis des aktuell auf die Lenkwelle wirkenden Drehmoments erforderlich, welches mithilfe einer Sensoreinrichtung ermittelt wird.

Als Sensoreinrichtungen zur Drehmomentmessung werden in Lenksystemen üblicherweise magnetbasierte Systeme eingesetzt, die einen drehfest auf der Welle angeordneten Magneten sowie einen Magnetfeldsensor umfassen, der gehäusefest bzw. drehfest mit einem zweiten Teil der Welle verbunden und bei einer Relativverdrehung eine Magnetfeldänderung zu detektieren in der Lage ist. Als Sensoren werden beispielsweise Hall-Sensoren oder MR-Sensoren verwendet. Wellenseitig werden Magnetringe mit mehreren Polen verwendet, die entweder direkt oder über einen Trägerring auf der Welle aufsitzen, wobei der Sensor in der Regel mit radialem Abstand außerhalb des Magneten positioniert ist.

Tendenziell werden in Lenksystemen Wellen mit zunehmender Steifigkeit eingesetzt, wodurch jedoch im Hinblick auf die Drehmomentmessung das Problem entsteht, dass die Welle bei gegebenem Drehmoment eine geringere Torsion ausführt, so dass auch die Magnetfeldänderung geringer ist, welche von dem Magnetfeldsensor detektiert wird. Das vom Sensor gelieferte Signal wird dementsprechend ungenauer.

Die US 5,501,110 offenbart eine Sensoreinrichtung zur Drehmomentmessung in einem Lenksystem eines Fahrzeugs. Die Sensoreinrichtung umfasst zwei Magnetfeldgeneratoren, die auf einer Trägerscheibe angeordnet sind, welche mit einem ersten Wellenabschnitt verbunden ist. Den Magnetfeldgeneratoren sind Sensoren zugeordnet, die auf einer Sensorscheibe auf einem weiteren Wellenabschnitt angeordnet sind. Jedem Magnetfeldgenerator liegt der zugeordnete Sensor auf radial gleicher Höhe mit axialem Abstand gegenüber.

Die DE 10 2005 038 516 A1 zeigt eine Vorrichtung zur Detektion von Umdrehungen einer Lenkwelle mit einem Dauermagneten, der auf einem Träger angeordnet ist, welcher drehfest mit einem Wellenabschnitt verbunden ist. Dem Dauermagnet ist ein ortsfester Magnetfeldsensor zugeordnet, der bei einem Umlaufen der Welle das sich ändernde Magnetfeld detektiert.

Die DE 10108 883 A1 offenbart einen Drehmoment-Meßaufnehmer, bei dem die wirkbestimmenden Elemente in einem zweiteiligen Gehäuse angeordnet sind.

Der Erfindung liegt die Aufgabe zu Grunde, mit einfachen konstruktiven Maßnahmen eine Sensoreinrichtung zur Drehmomenterfassung in Lenksystemen von Fahrzeugen in der Weise weiterzubilden, dass bei einer kompakten Ausführung ein möglichst genaues Drehmomentsignal erzeugt wird.

Diese Aufgabe wird erfindungsgemäß mit den Merkmalen des Anspruches 1 gelöst. Die Unteransprüche geben zweckmäßige Weiterbildungen an.

Die erfindungsgemäße Sensoreinrichtung wird zur Drehmomentmessung in Lenksystemen von Fahrzeugen eingesetzt, insbesondere zur Ermittlung des über das Lenkrad vom Fahrer vorgegebenen Handlenkmoments. Das Lenksystem ist vorzugsweise mit einem elektrischen Antriebsmotor zur Servounterstützung ausgestattet, wobei grundsätzlich auch eine hydraulische bzw. elektrohydraulische Servounterstützung in Betracht kommt.

Die Sensoreinrichtung umfasst einen drehfest auf einer Welle des Lenksystems angeordneten Magneten sowie einen Magnetfeldsensor, der bezogen auf den Magneten an einem zweiten Abschnitt der Welle angeordnet ist, gegenüber dem der den Magneten tragende Wellenabschnitt eine Relativdrehbewegung ausübt. Der Magnet ist hierbei von einem Magnethalter getragen, der mit der Welle verbunden ist. Während der Relativ-Drehbewegung zwischen Magnet und Magnetfeldsensor wird über den Sensor eine Änderung des vom Magneten ausgehenden Magnetfeldes detektiert, wobei diese Änderung ein Maß für die Relativverdrehung und damit für das wirkende Drehmoment ist.

Erfindungsgemäß ist vorgesehen, dass der Magnethalter, welcher den Magneten trägt, einen mit radialem Abstand zur Welle angeordneten Aufnahmebereich aufweist und dass der Magnet auf der der Welle zugewandten Innenseite des Aufnahmebereichs angeordnet ist. Dies bedeutet gegenüber Ausführungen aus dem Stand der Technik eine Abkehr im Hinblick auf die Anordnung des Magneten bezogen auf die Welle bzw. den Magnethalter. Bei der erfindungsgemäßen Ausführung befindet sich der Magnet auf der Innenseite des Aufnahmebereichs im Magnethalter und ist der Welle zugewandt, wohingegen bei Ausführungen aus dem Stand der Technik der Magnet auf der Außenseite des Magnethalters angeordnet ist und radial nach außen weist. Die neuartige Anordnung gemäß der Erfindung hat gegenüber dem Stand der Technik den Vorteil, dass sich trotz einer kompakten Gesamtausführung der Magnet mit einem verhältnismäßig großen radialen Abstand zur Welle befindet, so dass Winkeländerungen der Welle sich in einer verhältnismäßig großen Wegstrecke des Magneten niederschlagen und dementsprechend auch eine entsprechend signifikante Änderung des Magnetfelds feststellbar ist, was sich positiv auf die Güte des Messsignals auswirkt.

Auf Grund der optimierten Anordnung wird bei gleicher Bauraumgröße eine - Signalverbesserung in einem Größenbereich bis 50 % erreicht. Umgekehrt ist es auch möglich, bei gleicher Signalgüte eine signifikante Bauraumreduzierung zu erreichen.

Gemäß einer zweckmäßigen Ausführung ist der Magnet segmentförmig ausgebildet, insbesondere in Rechteckform oder als Teilkreis, so dass keine ringförmigen Magnete mehr erforderlich sind. Gleichwohl kann es aber vorteilhaft sein, einen ringförmigen Magneten vorzusehen.

Der Magnethalter ist zweckmäßigerweise mit einem Ring auf die Welle aufgesetzt und mit dieser verbunden, beispielsweise aufgepresst. Es kann zweckmäßig sein, eine Metallhülse vorzusehen, welche mit dem Magnethalter verbunden ist und über die der Magnethalter mit der Welle verbunden wird. Gemäß einer weiteren zweckmäßigen Ausführung ist der Magnethalter als Kunststoff-Spritzgussbauteil ausgeführt, wobei im Falle einer Magnethülse diese von dem Material des Magnethalters umspritzt wird. Der Magnethalter wird, ggf. über die Metallhülse, im Wege des Verstemmens oder einer Pressverbindung mit der Welle verbunden. Grundsätzlich möglich ist aber auch ein Verkleben oder eine Verbindung über mechanische Befestigungsmittel. Insbesondere in Kombination mit einem segmentförmigen Magneten ist es vorteilhaft, den Aufnahmebereich des Magnethalters, welcher Träger des Magneten ist, trapezförmig auszuführen, wobei die Schmalseite des Trapezes auf der radialen Außenseite und die Breitseite benachbart zur Welle liegt.

Der Magnetfeldsensor ist gemäß weiterer bevorzugter Ausführung fest mit einem Gehäusebauteil verbunden, welches mit dem zweiten Wellenabschnitt gekoppelt ist, gegenüber dem der erste Wellenabschnitt bei Aufbringen eines Drehmomentes eine Relativ-Drehbewegung ausübt. Bei diesem Gehäuse handelt es sich insbesondere um ein Wickelfedergehäuse zur Aufnahme einer Wickelfeder.

Des Weiteren ist es zweckmäßig, den Magnetfeldsensor auf einer Platine anzuordnen, welche insbesondere Rechteckform aufweist und zudem Träger von weiteren elektronischen Bauelementen ist sowie ggf. zusätzliche Kontaktstellen zur Stromversorgung und/oder für Softwareanschlüsse aufweist. Derartige Platinen bzw. Leiterkarten lassen sich kostengünstig herstellen.

Weitere Vorteile und zweckmäßige Ausführungen sind den weiteren Ansprüchen, der Figurenbeschreibung und den Zeichnungen zu entnehmen. Es zeigen:
Fig. 1 eine stirnseitige Ansicht einer Sensoreinrichtung auf einer Welle zur Drehmomentmessung,
Fig. 2 die Sensoreinrichtung aus Fig. 1 in einer teilweise geschnittenen Seitenansicht,
Fig. 3 ein weiteres Beispiel einer Sensoreinrichtung auf einer Welle,
Fig. 4 die Ausführung von Fig. 3 in Seitenansicht. In den Figuren sind gleiche Bauteile mit gleichen Bezugszeichen versehen.

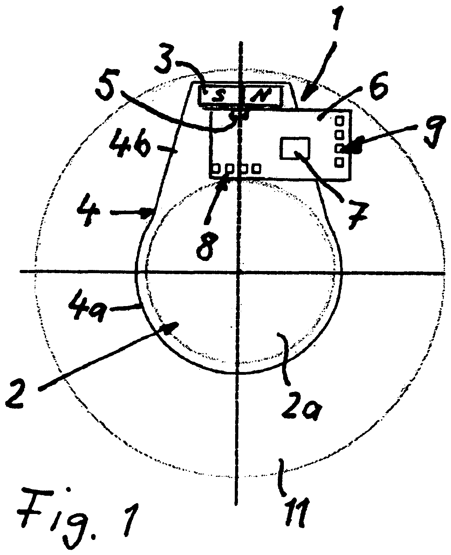

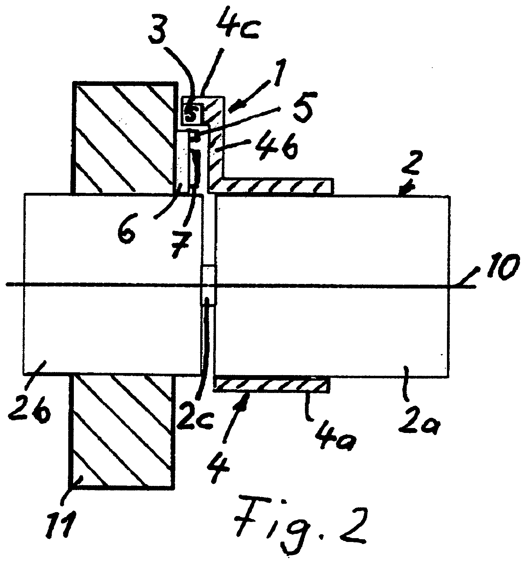

In den Figuren 1 und 2 ist ein erstes Ausführungsbeispiel dargestellt. Gemäß dieses Ausführungsbeispiels ist eine Sensoreinrichtung 1 zur Detektierung des in einer Welle 2 wirkenden Drehmoments vorgesehen, wobei die Welle 2 eine Eingangswelle 2a, eine Ausgangswelle 2b und einen verbindenden Drehstab 2c umfasst. Zu messen ist das zwischen Eingangs- und Ausgangswelle 2a bzw. 2b wirksame Drehmoment, welches im Drehstab 2c zu einer Torsion führt. Die Torsion als Maß für das wirksame Drehmoment wird mithilfe der Drehmomentsensoreinrichtung 1 ermittelt.

Die Sensoreinrichtung 1 umfasst einen segmentförmigen Dipolmagneten 3, der über einen Magnethalter 4 fest mit der Eingangswelle 2 verbunden ist. Die Pole N und S des Magneten 3 liegen sich radial bzw. in Umfangsrichtung gegenüber. Darüber hinaus besteht die Sensoreinrichtung 1 aus einem Magnetfeldsensor 5, der in der Lage ist, Änderungen des von dem Magneten 3 ausgehenden Magnetfeldes zu detektieren, welche aus einer Relativverdrehung zwischen Eingangswelle 2a und Ausgangswelle 2b resultieren. Der Magnetfeldsensor 5 ist beispielsweise als Hall-Sensor oder als AMR-Sensor ausgeführt, welcher auf dem anisotropen magnetoresistiven Effekt beruht.

Der Sensor 5 sitzt auf einer rechteckförmigen Leiterplatte bzw. Platine 6, die darüber hinaus Träger weiterer elektronsicher Bauteile 7 ist, insbesondere von ASICS. Auf der Platine 6 befindet sich außerdem eine elektrische Kontaktstelle 8, über die insbesondere ein elektrisches Wickelband anzuschließen ist, sowie eine Software- bzw. Programmierschnittstelle 9.

Der Magnethalter 4, an welchem der Magnet 3 angeordnet ist, besteht aus einem Ring 4a, welcher auf die Eingangswelle 2a aufgeschoben ist, sowie einem trapezförmigen Aufnahmebereich 4b, an dessen radial außen liegender Seite der Magnet 3 gehalten ist. Wie Fig. 2 zu entnehmen, ist einteilig mit dem Aufnahmebereich 4b des Magnethalters 4 ein axial überstehender Trägerabschnitt 4c im Bereich der radial außen liegenden Seite des Magnethalters ausgebildet, wobei auf der Innenseite des Trägerabschnitts 4c der Magnet 3 angeordnet ist. Auf diese Weise kann ein maximaler radialer Abstand zwischen dem Magneten 3 und der Welle 2 bzw. der Rotationsachse 10 der Welle realisiert werden. Der Magnethalter 4 ist insbesondere als Kunststoff-Spritzgussbauteil ausgeführt und fest mit der Eingangswelle 2a verbunden, wobei ggf. noch eine Metallhülse zur Verbindung mit der Welle vorgesehen sein kann, die in das Material des Magnethalters eingespritzt ist.

Der Magnetfeldsensor 5 befindet sich in dem radial zwischenliegenden Bereich zwischen dem Magneten 3 und der Außenseite der Welle 2. Auf diese Weise ist der Magnetfeldsensor 5 radial von dem Magneten 3 und dem Trägerabschnitt 4 überdeckt, welcher Träger des Magneten 3 ist, der insbesondere während des Spritzgussprozesses in das Material des Magnethalters eingebettet wird. Der Sensor 5 liegt zum einen radial unterhalb des Magneten 3 und zum andern auch axial innerhalb des vom Magneten 3 und des Trägerabschnittes 4c überdeckten Bereiches.

Die Platine 6 mit den darauf angeordneten Bauelementen einschließlich des Magnetfeldsensors 5 ist auf einem Wickelfedergehäuse 11 gehalten, welches fest mit der Ausgangswelle 2 verbunden ist.

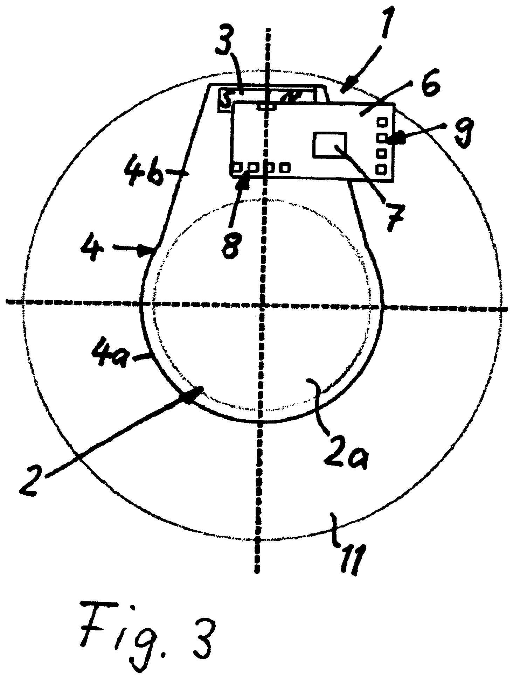

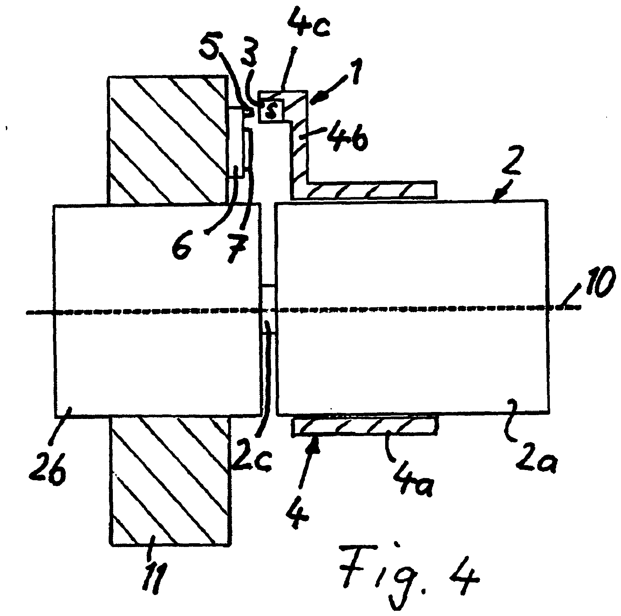

In dem Beispiel, welches nicht in den Schutzbereich des Anspruchs 1 fällt, gemäß den Figuren 3 und 4 ist der Grundaufbau identisch mit demjenigen aus Fig. 1 und 2, so dass auf die obige Beschreibung verwiesen wird. Unterschiedlich ist jedoch die Relativpositionierung des Magnetfeldsensors 5 in Bezug auf den Magneten 3. Der Magnetfeldsensor 5 ist im Ausführungsbeispiel nach den Figuren 3 und 4 dem Magneten 3 axial vorgelagert und somit nicht von dem Magneten 3 oder dem Trägerabschnitt 4c radial nach außen abgeschirmt. Der Magnet 3 ist entsprechend stirnseitig magnetisiert. Auch in dieser Ausführung ist der radiale Abstand zwischen dem Magnetfeldsensor 5 und der Welle 2 bzw. der Rotationsachse 10 nicht größer als der radiale Abstand des Magneten 3 und insbesondere des außen liegenden Trägerabschnittes 4c zur Welle 2 bzw. Rotationsachse 10.

### Bezugszeichenliste

- 1: Sensoreinrichtung
- 2: Welle
- 2a: Eingangswelle
- 2b: Ausgangswelle
- 2c: Drehstab
- 3: Magnet
- 4: Magnethalter
- 4a: Ring
- 4b: Aufnahmebereich
- 4c: Trägerabschnitt
- 5: Magnetfeldsensor
- 6: Platine
- 7: elektrische Bauelemente
- 8: Kontaktstelle
- 9: Programmierschnittstelle
- 10: Rotationsachse
- 11: Wickelfedergehäuse

## Patentansprüche

1. Sensoreinrichtung zur Drehmomentmessung in Lenksystemen von Fahrzeugen, mit einem drehfest auf einer Welle (2) angeordneten Magneten (3) und einem Magnetfeldsensor (5),
wobei der Magnet (3) von einem Magnethalter (4) gehalten ist, der mit der Welle (2) verbunden ist, wobei der Magnethalter (4) einen mit radialem Abstand zur Welle (2) angeordneten Aufnahmebereich (4b) aufweist und der Magnet (3) auf der der Welle (2) zugewandten Innenseite des Aufnahmebereichs (4b) angeordnet ist,
wobei der Magnetfeldsensor (5) bezogen auf den Magneten (3) an einem zweiten Abschnitt der Welle (2) angeordnet ist, gegenüber dem der den Magneten (3) tragende Wellenabschnitt eine Relativdrehbewegung ausübt,
**dadurch gekennzeichnet, dass**
der radiale Abstand des Magnetfeldsensors (5) zur Welle (2) nicht größer ist als der radiale Abstand des Magneten (3) zur Welle (2), wobei der Magnetfeldsensor (5) in einem radial zwischenliegenden Bereich zwischen der Welle (2) und dem Magneten (3) positioniert ist, so dass der Sensor radial nach außen von dem Magneten abgeschirmt wird.

2. Sensoreinrichtung nach Anspruch 1,
**dadurch gekennzeichnet,**
**dass** der Magnet (3) segmentförmig ausgebildet ist.

3. Sensoreinrichtung nach einem der Ansprüche 1 bis 2,
**dadurch gekennzeichnet,**
**dass** der Magnethalter (4) auf die Welle (2) aufgesetzt ist.

4. Sensoreinrichtung nach einem der Ansprüche 1 bis 3,
**dadurch gekennzeichnet,**
**dass** der Aufnahmebereich (4b) des Magnethalters (4) einen axial überstehenden Trägerabschnitt (4c) aufweist, an dessen der Welle (2) zugewandten Innenseite der Magnet (3) gehalten ist.

5. Sensoreinrichtung nach Anspruch 4,
**dadurch gekennzeichnet,**
**dass** der Trägerabschnitt (4c) den Magnetfeldsensor (5) radial nach außen abdeckt.

6. Sensoreinrichtung nach einem der Ansprüche 1 bis 5,
**dadurch gekennzeichnet,**
**dass** der Aufnahmebereich (4b) des Magnethalters (4) trapezförmig ausgebildet ist.

7. Sensoreinrichtung nach einem der Ansprüche 1 bis 6,
**dadurch gekennzeichnet,**
**dass** der Magnethalter (4) als Kunststoff-Spritzgussbauteil ausgeführt ist.

8. Sensoreinrichtung nach einem der Ansprüche 1 bis 7,
**dadurch gekennzeichnet,**
**dass** der Magnetfeldsensor (5) an einem Wickelfedergehäuse (11) gehalten ist.

9. Sensoreinrichtung nach einem der Ansprüche 1 bis 8,
**dadurch gekennzeichnet,**
**dass** der Magnetfeldsensor (5) auf einer rechteckförmigen Platine (6) sitzt, die auch Träger von elektronischen Bauelementen (7) ist.

10. Lenksystem in einem Fahrzeug mit einer Sensoreinrichtung (1) zur Drehmomentmessung nach einem der Ansprüche 1 bis 9.

## Claims

1. Sensor device for measuring torque in steering systems of vehicles, halving a magnet (3) which is arranged in a rotationally fixed fashion on a shaft (2), and a magnetic field sensor (5),
wherein the magnet (3) is held by a magnet holder (4) which is connected to the shaft (2), wherein the magnet holder (4) has a receptacle region (4b) which is arranged at a regular distance from the shaft (2), and the magnet (3) is arranged on the inside of the receptacle region (4b) facing the shaft (2),
wherein the magnetic field sensor (5) is arranged, with respect to the magnet (3), on a second section of the shaft (2), with respect to which the shaft section supporting the magnet (3) applies a relative rotational movement,
**characterized in that**
the radial distance of the magnetic field sensor (5) from the shaft (2) is not larger than the radial distance of the magnet (3) from the shaft (2), wherein the magnetic field sensor (5) is positioned in a radically intermediate region between the shaft (2) and the magnet (3), with the result that the sensor is screened radically toward the outsize by the magnet.

2. Sensor device according to Claim 1,
**characterized**
**in that** the magnet (3) is embodied in a segment shape.

3. Sensor device according to one of Claims 1 to 2, **characterized**
**in that** the magnet holder (4) is fitted onto the shaft (2).

4. Sensor device according to one of Claims 1 to 3, **characterized**
**in that** the receptacle region (4b) of the magnet holder (4) has an axially protruding carrier section (4c) on whose inner side facing the shaft (2) the magnet (3) is held.

5. Sensor device according to Claim 4, **characterized**
**in that** the carrier section (4c) covers the magnet field sensor (5) radically towards the outside.

6. Sensor device according to one of Claims 1 to 5, **characterized**
**in that** the receptacle region (4b) of the magnet holder (4) is embodied in a trapezoidal shape.

7. Sensor device according to one of Claims 1 to 6, **characterized**
**in that** the magnet holder (4) is embodied as a plastic injection-moulded part.

8. Sensor device according to one of Claims 1 to 7, **characterized**
**in that** the magnetic field sensor (5) is held on a winding spring housing (11).

9. Sensor device according to one of Claims 1 to 8, **characterized**
**in that** the magnet field sensor (5) is seated on a rectangular circuit board (6) which is also a carrier of electronic components (7).

10. Steering system in a vehicle, having a sensor device (1) for measuring the torque according to one of Claims 1 to 9.

## Revendications

1. Dispositif de détection destiné à la mesure du couple dans les systèmes de direction de véhicules, comprenant un aimant (3) monté en votation solitaire sur un arbre (2) et un capteur de champ magnétique (5), l'aimant (3) étant maintenu par un porte-aimant (4) qui est relié à l'arbre (2), le porte-aimant (4) possédant une zone d'accueil (4b) disposée avec un écart radial par rapport à l'arbre (2) et l'aimant (3) étant disposé sur le côté intérieur de la zone d'accueil (4b) qui fait face à l'arbre (2),
le capteur de champ magnétique (5), en référence à l'aimant (3), étant disposé sur une deuxième portion de l'arbre (2) par rapport à laquelle la portion d'arbre qui porte l'aimant (3) exerce un mouvement de rotation relative,
**caractérisé en ce que**
l'écart radial entre le capteur de champ magnétique (5) et l'arbre (2) n'est pas supérieur à l'écart radial entre l'aimant (3) et l'arbre (2), le capteur de champ magnétique (5) étant positionné dans une zone radialement intermédiaire entre l'arbre (2) et l'aimant (3), de sorte que l'aimant assure une projection par blindage du capteur dans le sens radial vers l'extérieur.

2. Dispositif de détection selon la revendication 1, **caractérisé en ce que** l'aimant (3) est réalisé en forme de segment.

3. Dispositif de détection selon l'une des revendications 1 à 2, **caractérisé en ce que** le porte-aimant (4) est posé sur l'arbre (2).

4. Dispositif de détection selon l'une des revendications 1 à 3, **caractérisé en ce que** la zone d'accueil (4b) du porte-aimant (4) possède une portion porteuse (4c) qui fait saillie dans le sens axial, au niveau de laquelle est maintenu le côté intérieur de l'aimant (3) qui fait face à l'arbre (2).

5. Dispositif de détection selon la revendication 4, **caractérisé en ce que** la portion porteuse (4c) recouvre le capteur de champ magnétique (5) dans le sens radial vers l'extérieur.

6. Dispositif de détection selon l'une des revendications 1 à 5, **caractérisé en ce que** la zone d'accueil (4b) du porte-aimant (4) est de configuration trapézoïdale.

7. Dispositif de détection selon l'une des revendications 1 à 6, **caractérisé en ce que** le porte-aimant (4) est réalisé sous la forme d'une pièce en matière plastique moulée par injection.

8. Dispositif de détection selon l'une des revendications 1 à 7, **caractérisé en ce que** le capteur de champ magnétique (5) est maintenu sur un boîtier de ressort d'enroulement (11).

9. Dispositif de détection selon l'une des revendications 1 à 8, **caractérisé en ce que** le capteur de champ magnétique (5) repose sur une platine (6) rectangulaire qui est également le support de composants électroniques (7).

10. Système de direction dans un véhicule comprenant un dispositif de détection (1) destiné à la mesure du couple selon l'une des revendications 1 à 9.
